# EUROPEAN PATENT SPECIFICATION

(11) **EP 3 952 509 B1**
(45) Date of publication and mention of the grant of the patent: **30.04.2025**
(21) Application number: 19922191.2
(22) Date of filing: 26.03.2019
(51) Int. Cl.: H04W 72/04, H04L 1/16, H04W 28/04, H04W 72/12

(54) **TERMINAL, RADIO COMMUNICATION METHOD, BASE STATION AND SYSTEM**
GERÄT, DRAHTLOSKOMMUNIKATIONSVERFAHREN, BASISSTATION UND SYSTEM
TERMINAL, PROCÉDÉ DE COMMUNICATION SANS FIL, STATION DE BASE ET SYSTÈME

(43) Date of publication of application: 09.02.2022
(73) Proprietor: NTT DOCOMO, INC., Chiyoda-Ku Tokyo 100-6150 (JP)
(72) Inventor: TAKEDA, Kazuki, Tokyo 100-6150 (JP); TAKAHASHI, Yuki, Tokyo 100-6150 (JP); NAGATA, Satoshi, Tokyo 100-6150 (JP); ZHANG, Xiaohong, Beijing 100190 (CN); WANG, Lihui, Beijing 100190 (CN); GUO, Shaozhen, Beijing 100190 (CN); HOU, Xiaolin, Beijing 100190 (CN); LI, Anxin, Beijing 100190 (CN)
(74) Representative: Hoffmann Eitle
(86) International application number: PCT/JP2019/012900
(87) International publication number: WO 2020/194514

(56) References cited:
- WO-A1-2019/003635
- FUJITSU: "Clarification on Type-2 HARQ-ACK codebook determination in TS 38.213", 3GPP DRAFT; R1-1800128 CLARIFICATION ON TYPE-2 HARQ-ACK CODEBOOK DETERMINATION FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Vancouver, Canada; 20180122 - 20180126, 12 January 2018 (2018-01-12), XP051384284, Retrieved from the Internet <URL:http://www.3gpp.org/ftp/tsg%5Fran/WG1%5FRL1/TSGR1%5FAH/NR%5FAH%5F1801/Docs/> [retrieved on 20180112]
- OPPO: "Text proposals for HARQ-ACK transmission", 3GPP DRAFT; R1-1808894, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20180820 - 20180824, 10 August 2018 (2018-08-10), XP051516265, Retrieved from the Internet <URL:http://www.3gpp.org/ftp/tsg%5Fran/WG1%5FRL1/TSGR1%5F94/Docs/R1%2D1808894%2Ezip> [retrieved on 20180810]
- ERICSSON: "On remaining issues on carrier aggregation", 3GPP DRAFT; R1-1802917 ON REMAINING ISSUES ON CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20180226 - 20180302, 17 February 2018 (2018-02-17), XP051398306, Retrieved from the Internet <URL:http://www.3gpp.org/ftp/tsg%5Fran/WG1%5FRL1/TSGR1%5F92/Docs/> [retrieved on 20180217]
- SAMSUNG: "Text proposal to 38.213 on semi-static HARQ-ACK codebook", 3GPP TSG RAN WG1 ADHOC_NR_AH_1801 RL-1801268, 26 January 2018 (2018-01-26), pages 1 - 9, XP051385487

## Description

### Technical Field

The present disclosure relates to a terminal, a radio communication method, a base station and a system in a next-generation mobile communication system.

### Background Art

In a Universal Mobile Telecommunications System (UMTS) network, Long Term Evolution (LTE) has been specified for the purpose of further increasing a data rate, providing low latency, and the like (see Non Patent Literature 1). Further, LTE-Advanced (Third Generation Partnership Project (3GPP) Release (Rel.) 10 to 14) has been specified for the purpose of further increasing capacity and advancement of LTE (3GPP Rel. 8 and 9).

Successor systems of LTE (for example, also referred to as 5th generation mobile communication system (5G), 5G+ (plus), new radio (NR), and 3GPP Rel. 15 or later) are considered.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

FUJITSU: "Clarification on Type-2 HARQ-ACK codebook determination in TS 38.213", 3GPP DRAFT; R1-1800128 relates to Type-2 HARQ-ACK codebook in Subclause 9.1.3.1 of TS 38.213. The document proposes several issues with potential ambiguity or inconsistency for discussion and suggests some text proposals.

OPPO: "Text proposals for HARQ-ACK transmission", 3GPP DRAFT; R1-1808894 relates to inconsistencies between the specifications and agreements for HARQ-ACK transmission.

### Summary of Invention

### Technical Problem

In a future radio communication system (for example, NR), transmission and reception based on semi-persistent scheduling (SPS) are used.

The existing Rel-15 NR has a specification in which SPS is not simultaneously configured for more than one serving cell per one cell group (that is, one SPS configuration per cell group).

Incidentally, in an NR of Rel-16 or later, it is being studied that a plurality of SPSs (multiple SPSs) in one cell group are configured for more flexible control. A minimum SPS cycle in the existing Rel-15 NR is 10 ms, but the introduction of the SPS cycle with a shorter cycle (for example, a given number of symbol units, slot units, and the like) is also being studied.

In this case, more than one delivery confirmation information (for example, Hybrid Automatic Repeat reQuest ACKnowledgement (HARQ-ACK)) for the multiple SPSs is required to be included in one HARQ-ACK codebook. However, a method for setting the HARQ-ACK codebook for the multiple SPSs is not studied yet. When the HARQ-ACK codebook related to the multiple SPSs is not clearly defined, appropriate HARQ control cannot be performed in a case where the multiple SPSs are used, and there is a risk that communication throughput is deteriorated.

Therefore, one of objects of the present disclosure is to provide a user terminal and a radio communication method capable of appropriately generating a HARQ-ACK codebook even when multiple SPSs are used.

### Solution to Problem

The object of the invention is achieved by the subject-matter of the independent claims. Advantageous embodiments are defined in the dependent claim. Further examples are provided for facilitating the understanding of the invention.

A user terminal according to one aspect of the present disclosure is provided according to appended claim 1.

### Advantageous Effects of Invention

According to one aspect of the present disclosure, the HARQ-ACK codebook can be appropriately generated even when the multiple SPSs are used.

### Brief Description of Drawings

Fig. 1 is a diagram illustrating an example of an assumption regarding codebook generation.
Figs. 2A and 2B are diagrams illustrating examples of the codebook generation based on Embodiment 1-2.
Figs. 3A and 3B are diagrams illustrating examples of the codebook generation based on Embodiment 1-3-1.
Figs. 4A and 4B are diagrams illustrating examples of the codebook generation based on Embodiment 1-3-2.
Figs. 5A and 5B are diagrams illustrating examples of the codebook generation based on Embodiment 2-2.
Figs. 6A and 6B are diagrams illustrating examples of the codebook generation based on Embodiment 2-3-1.
Figs. 7A and 7B are diagrams illustrating examples of the codebook generation based on Embodiment 2-3-2.
Fig. 8 is a diagram illustrating an example of a schematic configuration of a radio communication system according to one embodiment.
Fig. 9 is a diagram illustrating an example of a configuration of a base station according to one embodiment.
Fig. 10 is a diagram illustrating an example of a configuration of a user terminal according to one embodiment.
Fig. 11 is a diagram showing an example of a hardware configuration of the base station and the user terminal according to one embodiment.

### Description of Embodiments

In an NR, transmission and reception based on semi-persistent scheduling (SPS) are used. In the present disclosure, the SPS may be replaced with downlink (DL) SPS.

UE may activate or deactivate (release) an SPS configuration based on a downlink control channel (Physical Downlink Control Channel (PDCCH)). The UE may receive a physical downlink shared channel (PDSCH) of the corresponding SPS based on the activated SPS configuration.

In the present disclosure, the PDCCH may be replaced with downlink control information (DCI) transmitted by using the PDCCH, simply DCI, or the like.

The DCI for activating or deactivating the SPS configuration may be referred to as SPS activation DCI, SPS deactivation DCI, or the like. The SPS deactivation DCI may be referred to as SPS release DCI, simply SPS release, or the like.

The DCI may include cyclic redundancy check (CRC) bits scrambled by a given RNTI (for example, a Configured Scheduling Radio Network Temporary Identifier (CS-RNTI)).

The UE may activate or release the SPS configuration based on the DCI (SPS activation DCI or SPS release DCI).

The SPS configuration (which may be referred to as configuration information regarding the SPS) may be configured for the UE by using higher layer signaling.

In the present disclosure, the higher layer signaling may be any of, for example, radio resource control (RRC) signaling, medium access control (MAC) signaling, broadcast information, and the like, or a combination thereof.

The MAC signaling may use, for example, a MAC control element (MAC CE), a MAC protocol data unit (PDU), and the like. The broadcast information may be, for example, a master information block (MIB), a system information block (SIB), remaining minimum system information (RMSI), other system information (OSI), and the like.

The configuration information regarding the SPS (for example, an "SPS-Config" information element of RRC) may include an index (SPS index) for identifying the SPS, information regarding a resource of the SPS, information regarding a PUCCH resource for the SPS, and the like.

The SPS may be configured for a special cell (SpCell) (for example, a primary cell (PCell) or a primary secondary cell (PSCell)), or may be configured for a secondary cell (SCell). However, the existing Rel-15 NR has a specification in which the SPS is not simultaneously configured for more than one serving cell per one cell group (that is, one SPS configuration per cell group).

### (HARQ-ACK codebook)

The UE may transmit HARQ-ACK feedback by using one PUCCH resource in units of HARQ-ACK codebooks including bits of one or more pieces of acknowledgement information (for example, Hybrid Automatic Repeat reQuest ACKnowledgement (HARQ-ACK)). The HARQ-ACK bit may be referred to as HARQ-ACK information, HARQ-ACK information bits, or the like.

Here, the HARQ-ACK codebook may include bits for the HARQ-ACK in at least one unit of a time domain (for example, a slot), a frequency domain (for example, a component carrier (CC)), a spatial domain (for example, a layer), a transport block (TB), and a code block group (CBG) constituting the TB. The HARQ-ACK codebook may be simply referred to as a codebook.

Note that the number of bits (size) or the like included in the HARQ-ACK codebook may be determined semi-statically or dynamically. The HARQ-ACK codebook of which the size is determined semi-statically is also referred to as a semi-static HARQ-ACK codebook, a Type 1 HARQ-ACK codebook, or the like. The HARQ-ACK codebook of which the size is dynamically determined is also referred to as a dynamic HARQ-ACK codebook, a Type 2 HARQ-ACK codebook, or the like.

Which one of the Type 1 HARQ-ACK codebook and the Type 2 HARQ-ACK codebook is used may be configured for the UE by using higher layer parameters (for example, pdsch-HARQ-ACK-Codebook).

In the case of the Type 1 HARQ-ACK codebook, in a given range (for example, a range configured based on the higher layer parameter), the UE may feed back HARQ-ACK bits for PDSCH candidates (or PDSCH opportunities (occasions)) corresponding to the given range regardless of the presence or absence of PDSCH scheduling.

The given range may be determined based on at least one of a given period (for example, a set of a given number of occasions for receiving a PDSCH candidate or a given number of monitoring occasions for the PDCCH), the number of CCs configured or activated for the UE, the number of TBs (the number of layers or ranks), the number of CBGs per TB, and whether spatial bundling is applied or not. The given range is also referred to as a HARQ-ACK window, a HARQ-ACK bundling window, a HARQ-ACK feedback window, or the like.

In the Type 1 HARQ-ACK codebook, within the given range, the UE secures bits for the PDSCH in the codebook even when the PDSCH is not scheduled for the UE. When it is determined that the PDSCH is not actually scheduled, the UE can feed back the bit as a NACK bit.

On the other hand, in the case of the Type 2 HARQ-ACK codebook, the UE may feed back the HARQ-ACK bits for the scheduled PDSCH in the given range.

Specifically, the UE may determine the number of bits of the Type 2 HARQ-ACK codebook based on a given field (for example, a Downlink Assignment Indicator (Index) (DAI) field) in the DCI. The DAI field may include a counter DAI (C-DAI) and a total DAI (T-DAI).

The C-DAI may indicate a counter value of downlink transmission (PDSCH, Data, or TB) scheduled within a given period. For example, the C-DAI in the DCI for scheduling data within the given period may indicate the number counted in the frequency domain (for example, CC) first and then in the time domain within the given period. For example, the C-DAI may correspond to a value obtained by counting the PDSCH reception or the SPS release in ascending order of a serving cell index and then in ascending order of the PDCCH monitoring occasion for one or more DCIs included in a given period.

The T-DAI may indicate a total value (total number) of data scheduled within a given period. For example, the T-DAI in the DCI for scheduling data in a given time unit (for example, PDCCH monitoring occasions) within the given period may indicate the total number of data scheduled up to the time unit (also referred to as a point, timing, or the like) within the given period.

In the existing Rel-15 NR, the arrangement order of the HARQ-ACK bits in the codebook is determined as follows. For the Type 1 HARQ-ACK codebook, the UE maps the SPS PDSCH and the HARQ-ACK bits corresponding to the SPS release to the HARQ-ACK codebook in the same manner as the HARQ-ACK bits corresponding to the dynamic PDSCH (for example, according to a list (table) related to the time domain resource allocation). There is no difference in the handling of the SPS PDSCH, the SPS release, and the dynamic PDSCH corresponding to the PDSCH reception occasions within a given period.

In the existing Rel-15 NR, for the Type 2 HARQ-ACK codebook, the UE may map the HARQ-ACK bits corresponding to the SPS PDSCH after the HARQ-ACK codebook corresponding to a dynamic TB-based PDSCH.

In the existing Rel-15 NR, the UE does not expect to transmit HARQ-ACK information for more than one SPS PDSCH reception on the same PUCCH.

Incidentally, in an NR of Rel-16 or later, it is being studied that a plurality of SPSs (multiple SPSs) in one cell group are configured for more flexible control. The UE may use a plurality of SPS configurations for one or more serving cells. A minimum SPS cycle in the existing Rel-15 NR is 10 ms, but the introduction of the SPS cycle with a shorter cycle (for example, a given number of symbol units, slot units, and the like) is also being studied.

In this case, more than one piece of HARQ-ACK information for the multiple SPSs may be required to be included in one HARQ-ACK codebook. However, a method for setting the HARQ-ACK codebook for the multiple SPSs is not studied yet. When the HARQ-ACK codebook related to the multiple SPSs is not clearly defined, appropriate HARQ control cannot be performed in a case where the multiple SPSs are used, and there is a risk that communication throughput is deteriorated.

Thus, the present inventors have conceived a method for appropriately generating the HARQ-ACK codebook even when the multiple SPSs are used. According to one aspect of the invention, more than one HARQ-ACK for the plurality of SPS configurations can be appropriately multiplexed into one HARQ-ACK codebook.

Hereinafter, embodiments according to the present disclosure will be described in detail with reference to the drawings. Radio communication methods according to the respective embodiments may be applied independently, or may be applied in combination.

In the present disclosure, a codebook size (CBS) and a codebook may be replaced with each other.

### (Radio Communication Method)

### <Embodiment 1>

Embodiment 1 describes a case where CBG-based retransmission is not supported for the SPS.

In Embodiment 1, even though CBG-based transmission is configured for a given cell, the UE may assume that the TB-based transmission is applied to an SPS triggered by activation DCI (for example, DCI format 1_0 or 1_1). The UE may assume that HARQ-ACK feedback for the SPS configured in the given cell is TB-based HARQ-ACK feedback.

The HARQ-ACKs for the plurality of SPS PDSCHs may be multiplexed (included) into one HARQ-ACK codebook.

Embodiment 1 may be broadly divided into Embodiments 1-1 to 1-3 in terms of the determination of the codebook. Embodiment 1-3 may be further classified into Embodiment 1-3-1 and Embodiment 1-3-2.

In Embodiment 1-1, the existing Rel-15 mechanism is used for determining the Type 1 HARQ-ACK codebook. The UE may map the HARQ-ACK bits corresponding to, for example, the HARQ-ACK bits corresponding to the SPS PDSCH associated with the activation DCI and the SPS PDSCH and the SPS release not associated with the activation DCI to the HARQ-ACK codebook in the same manner as the HARQ-ACK bits corresponding to the dynamic PDSCH (for example, according to a list (table) related to the time domain resource allocation).

Note that, in the present disclosure, the SPS PDSCH associated with the activation DCI may mean a first SPS PDSCH to be activated (triggered) by the activation DCI. At least one of the frequency resource, the time resource, and a modulation and coding scheme (MCS) of the SPS PDSCH associated with the activation DCI may be determined based on at least one of the frequency resource allocation field, the time resource allocation field, and the MCS index of the activation DCI.

In the present disclosure, the SPS PDSCH not associated with the activation DCI may mean second and subsequent SPS PDSCHs activated by the activation DCI.

In Embodiment 1-2, the existing Rel-15 mechanism is used for determining the Type 2 HARQ-ACK codebook. For example, the UE may map the HARQ-ACK bits corresponding to the SPS PDSCH not associated with the activation DCI after the HARQ-ACK codebook corresponding to the dynamic TB-based PDSCH. The UE may map the HARQ-ACK bits corresponding to the SPS PDSCH and the SPS release associated with the activation DCI at locations derived from a value of at least one of the C-DAI and the T-DAI.

In Embodiment 1-3, a subblock of the HARQ-ACK for the SPS (which may be referred to as a sub-codebook, a subset, a subgroup, or the like) is used to determine the Type 2 HARQ-ACK codebook.

In Embodiment 1-3-1, the UE may map, as HARQ-ACK sub-codebooks for the SPS, the HARQ-ACK bits corresponding to the SPS PDSCH associated with the activation DCI and the SPS PDSCH and the SPS release not associated with the activation DCI after the HARQ-ACK sub-codebooks corresponding to the dynamic TB-based PDSCH and CBG-based PDSCH.

In Embodiment 1-3-2, the UE may map, as HARQ-ACK sub-codebooks for the SPS, the HARQ-ACK bits corresponding to the SPS PDSCH not associated with the activation DCI after the HARQ-ACK sub-codebooks corresponding to the dynamic TB-based PDSCH and CBG-based PDSCH. On the other hand, the UE may map the HARQ-ACK bits corresponding to the SPS PDSCH and the SPS release associated with the activation DCI at locations derived from a value of at least one of the C-DAI and the T-DAI.

Note that, unless otherwise noted, in the present disclosure, the arrangement order of bits for the SPS PDSCH related to the HARQ-ACK codebook of the Type 2 HARQ-ACK may be determined in the following order of rules (1) to (3):
(1) Earlier SPS occasion first (by earliest SPS occasion),
(2) Lower CC first (in other words, a carrier having a lower CC index) (by smallest CC),
(3) Lower SPS index first (by smallest SPS index).

However, the order is not limited thereto, and the rules (1) to (3) may be applied in any order. Note that "earlier" of these rules may be replaced with "later", and "lower" may be replaced with "higher".

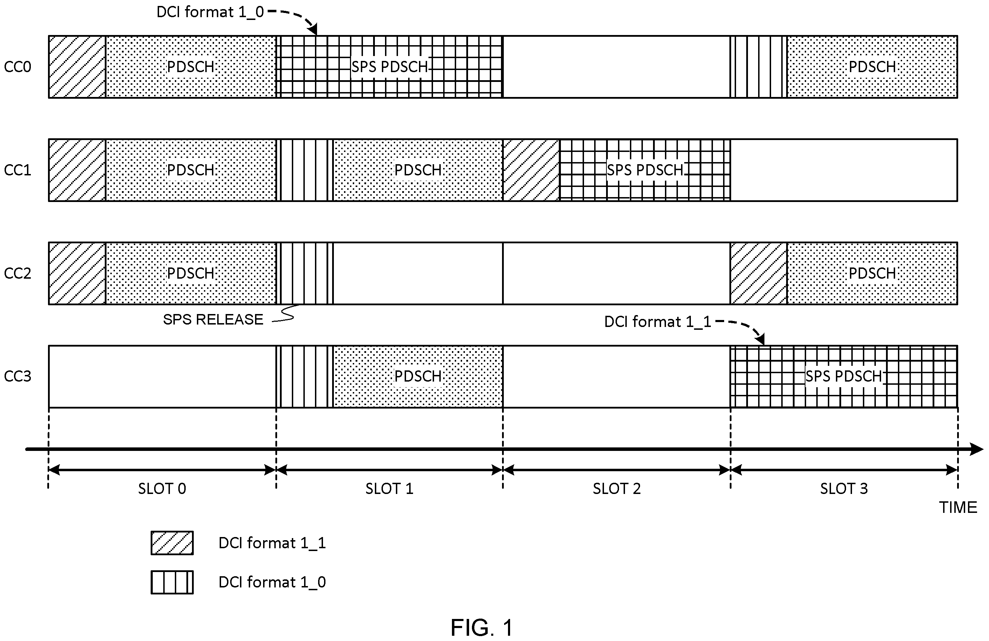

Hereinafter, specific generation of the Type 2 HARQ-ACK codebook of Embodiment 1 will be described. Fig. 1 is a diagram illustrating an example of assumption related to codebook generation.

In the present assumption, the CBG-based retransmission is not supported for the SPS. That is, all the SPS PDSCHs are retransmitted on the TB basis. The dynamic PDSCH in a TB-based cell (in other words, a cell in which the TB-based retransmission is configured) is retransmitted on the TB basis. The dynamic PDSCH in a CBG-based cell (in other words, a cell in which the CBG-based retransmission is configured) is retransmitted on the CBG basis.

In the present assumption, the UE has a plurality of SPS configurations for four serving cells (CC0 to CC3). CC0 is the CBG-based cell, and the number of CBGs is configured to two. CC1 is the CBG-based cell, and the number of CBGs is configured to four. CC2 and CC3 are the TB-based cells. The maximum number of TBs in each cell is one.

In a slot 0 of the CC0, the UE receives DCI format 1_1 and receives the PDSCH based on the DCI. The UE receives the SPS PDSCH already activated with DCI format 1_0 (before the slot 0 illustrated) in a slot 1 of the CC0. In a slot 3 of the CC0, the UE receives DCI format 1_0 and receives the PDSCH based on the DCI.

In a slot 0 of the CC1, the UE receives DCI format 1_1 and receives the PDSCH based on the DCI. In the slot 1 of the CC0, the UE receives DCI format 1_0 and receives the PDSCH based on the DCI. In a slot 2 of the CC1, the UE receives DCI format 1_1 corresponding to the activation DCI and receives the SPS PDSCH activated by the DCI.

In a slot 0 of the CC2, the UE receives DCI format 1_1 and receives the PDSCH based on the DCI. The UE receives DCI format 1_0 corresponding to the SPS release in a slot 1 of the CC2. In a slot 3 of the CC2, the UE receives DCI format 1_1 and receives the PDSCH based on the DCI.

In a slot 1 of the CC3, the UE receives DCI format 1_0 and receives the PDSCH based on the DCI. The UE receives the SPS PDSCH already activated with DCI format 1_1 (before the slot 0 illustrated) in a slot 3 of the CC3.

The following codebook generation based on this assumption describes an example in which the HARQ-ACKs for all the SPS PDSCH and dynamic PDSCH in Fig. 1 are transmitted on the same PUCCH by using the same HARQ-ACK codebook.

In the example of Fig. 1, the SPS PDSCH associated with the activation DCI and the SPS PDSCH and the SPS release not associated with the activation DCI are all included. The SPS PDSCH associated with the activation DCI is the SPS PDSCH of the slot 2 of the CC1, and the SPS PDSCH not associated with the activation DCI is the SPS PDSCH of the slot 1 of the CC0 and the slot 3 of the CC3.

### [Codebook generation based on Embodiment 1-2]

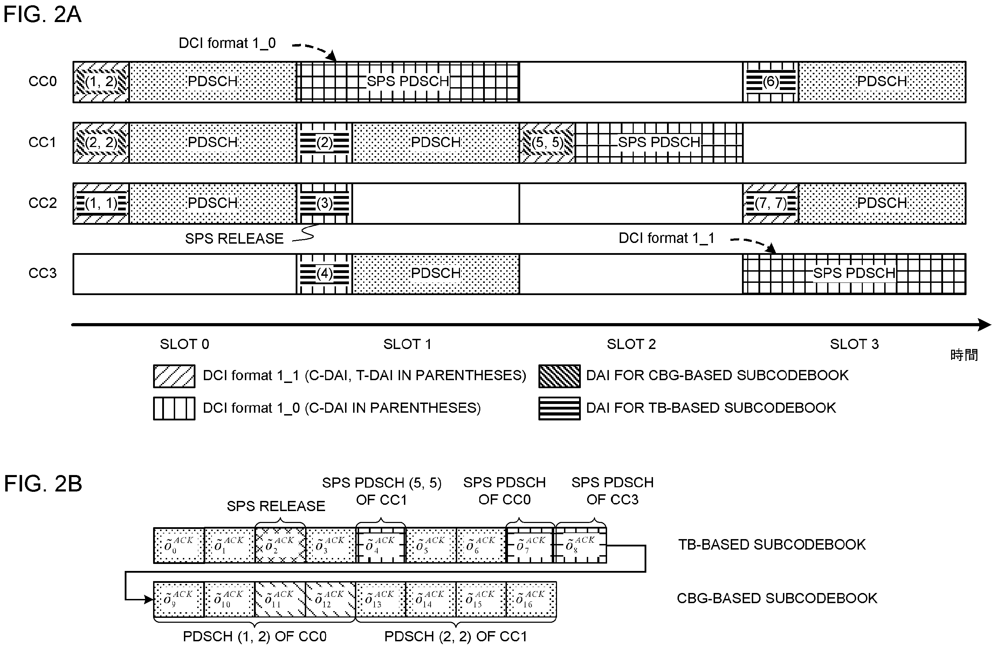

Figs. 2A and 2B are diagrams illustrating examples of the codebook generation based on Embodiment 1-2. Fig. 2A illustrates corresponding C-DAI and T-DAI in DCI format 1_1 for the assumption of Fig. 1. For example, the DCI format 1_1 of the slot 0 of the CC0 includes (C-DAI, T-DAI) = (1, 2). The corresponding C-DAI is illustrated in the DCI format 1_0 and the SPS release. For example, the DCI format 1_0 of the slot 3 of the CC0 includes (C-DAI) = (6).

Note that, usually, a value of the DAI is represented by applying a modulo operation (is represented by a remainder obtained by dividing an original value by a given number (for example, four) (that is, original value mod/given number)). However, in the example of the present disclosure, in order to facilitate understanding, as illustrated in Fig. 2A, the modulo operation is not applied.

In the present disclosure, the PDSCH scheduled by the DCI format 1_0 including (C-DAI) = (x) (x is an integer) is also referred to as PDSCH (x). The PDSCH scheduled by the DCI format 1_1 including (C-DAI, T-DAI) = (x, y) (x and y are integers) is also referred to as PDSCH (x, y). The same notation may be applied to the SPS PDSCH, the SPS release, and the like associated with the activation DCI.

In this example, the HARQ-ACK codebook includes the TB-based sub-codebook corresponding to the TB-based HARQ-ACK bits and the CBG-based sub-codebook corresponding to the CBG-based HARQ-ACK bits.

Note that the value of the DAI may be counted up independently for each sub-codebook. The same applies to the following examples.

In the CBG-based cells (CC0 and CC1), the HARQ-ACKs for the dynamic PDSCH scheduled by a specific DCI format (in this example, DCI format 1_1) may correspond to the CBG-based HARQ-ACK bits, and the HARQ-ACK bits for the dynamic PDSCH scheduled by a DCI format (in this example, DCI format 1_0) other than the specific DCI format may correspond to the TB-based HARQ-ACK bits.

Note that, for the CBG-based HARQ-ACK, the number of HARQ-ACK bits per PDSCH may correspond to the maximum number of CBGs among HARQ-ACK bits configured for the CBG-based cells. In the assumption of Fig. 1, the number of CBG-based HARQ-ACK bits per PDSCH is four.

In the TB-based cells (CC2 and CC3), regardless of the DCI format to be scheduled, the HARQ-ACK bits for the dynamic PDSCH may correspond to the TB-based HARQ-ACK bits.

Fig. 2B is a diagram illustrating a content of each bit in the HARQ-ACK codebook corresponding to Fig. 2A. In Fig. 2B, a total of 17 bits of o₀^{ACK} to o₁₆^{ACK} are illustrated. Note that, in the present specification, a tilde (~) attached above "o" of oₖ^{ACK} (k is an integer) is omitted for the sake of simplicity, but can be replaced with a tilde-attached notation as illustrated in the drawings. Note that the oₖ^{ACK} may mean a HARQ-ACK for a PDSCH of C-DAI = k + 1 in the TB-based codebook.

As described above, in Embodiment 1-2, the UE constructs the codebook to initially arrange the TB-based HARQ-ACK bits and subsequently arrange the CBG-based HARQ-ACK bits. The HARQ-ACK bits corresponding to the SPS PDSCH not associated with the activation DCI are arranged at a tail portion of the TB-based HARQ-ACK bits.

The TB-based HARQ-ACK bits are arranged in the order from an earlier (lower) CC index and an earlier (lower) PDCCH monitoring period. That is, o₀^{ACK} to o₆^{ACK} correspond to:
o₀^{ACK}: PDSCH (1, 2) in slot 0 of CC2,
o₁^{ACK}: PDSCH (2, 2) in slot 1 of CC1,
o₂^{ACK}: SPS release (3) of slot 1 of CC2,
o₃^{ACK}: PDSCH (4) in slot 1 of CC3,
o₄^{ACK}: SPS PDSCH (5, 5) associated with activation DCI of slot 2 of CC1,
o₅^{ACK}: PDSCH (6) in slot 3 of CC0,
o₆^{ACK}: PDSCH (7, 7) in slot 3 of CC2.

o₇^{ACK} corresponds to the SPS PDSCH in the slot 1 of the CC0, and o₈^{ACK} corresponds to the SPS PDSCH in the slot 3 of the CC3. These bits correspond to the HARQ-ACK bits corresponding to the SPS PDSCH not associated with the activation DCI.

o₉^{ACK} to o₁₂^{ACK} correspond to the PDSCH (1, 2) of the slot 0 of the CC0, and o₁₃^{ACK} to o₁₆^{ACK} correspond to the PDSCH (2, 2) of the slot 0 of the CC1. The number of CBGs in the CC0 is two, and the number of bits is left over with 4 bits. Thus, the UE may generate 2 bits of o₉^{ACK} and o₁₀^{ACK} as the HARQ-ACK bits corresponding to the above PDSCH (1, 2), and 2 bits of o₁₁^{ACK} and o₁₂^{ACK} may generate the same (in other words, repeated) values as o₉^{ACK} and o₁₀^{ACK}. 2 bits of o₁₁^{ACK} and o₁₂^{ACK} may be arbitrary values (for example, fixed at 0). 2 bits corresponding to the PDSCH (1, 2) may be indicated by arbitrary 2 bits of o₉^{ACK} to o₁₂^{ACK}.

As described above, according to Embodiment 1-2, the Type 2 HARQ-ACK codebook can be generated, for example, by using a sequence of bits in the order of the TB-based sub-codebook and the CBG-based sub-codebook. When the base station understands this construction order, there is no codebook inconsistency between the UE and the base station, and transmission and reception processing can be appropriately controlled.

### [Codebook generation based on Embodiment 1-3-1]

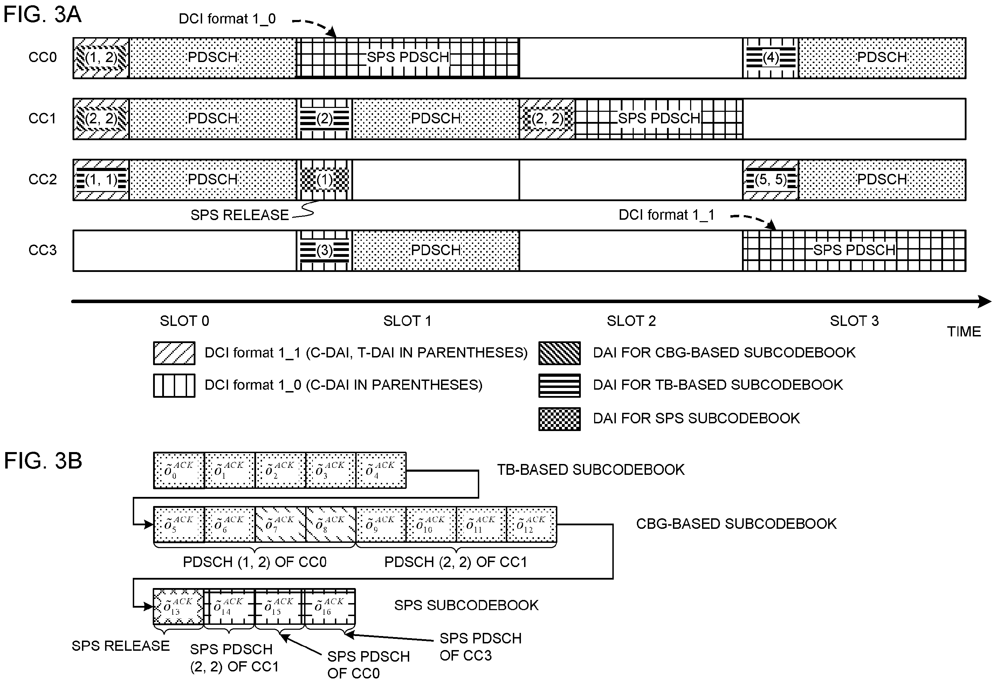

Figs. 3A and 3B are diagrams illustrating examples of the codebook generation based on Embodiment 1-3-1. Hereinafter, only differences between Fig. 3A and Fig. 2A will be described, and only differences between Fig. 3B and Fig. 2B will be described. The same description will not be repeated.

In Fig. 3A, the DAI for the SPS sub-codebook is illustrated. The SPS release in the slot 1 of the CC2 corresponds to C-DAI = 1 of the SPS sub-codebook, and the activation DCI in the slot 2 of the CC1 corresponds to (C-DAI, T-DAI) = (2, 2) of the SPS sub-codebook. As these DAIs are no longer counted, a value of a part of the DAIs for the TB-based sub-codebooks is reduced.

As described above, in Embodiment 1-3-1, the UE constructs the codebook to initially arrange the TB-based HARQ-ACK bits of the dynamic PDSCH, subsequently arrange the CBG-based HARQ-ACK bits of the dynamic PDSCH, and subsequently arrange the HARQ-ACK bits associated with the SPS.

o₀^{ACK} to o₄^{ACK} correspond to the TB-based HARQ-ACK bits of the dynamic PDSCH, and respectively correspond to:
o₀^{ACK}: PDSCH (1, 2) in slot 0 of CC2,
o₁^{ACK}: PDSCH (2, 2) in slot 1 of CC1,
o₂^{ACK}: PDSCH (3) in slot 1 of CC3,
o₃^{ACK}: PDSCH (4) in slot 3 of CC0,
o₄^{ACK}: PDSCH (5, 5) in slot 3 of CC2.

o₅^{ACK} to o₁₂^{ACK} correspond to the CBG-based HARQ-ACK bits of the dynamic PDSCH. o₅^{ACK} to o₅^{ACK} correspond to the PDSCH (1, 2) of the slot 0 of the CC0, and o₉^{ACK} to o₁₂^{ACK} correspond to the PDSCH (2, 2) of the slot 0 of the CC1.

o₁₃^{ACK} to o₁₆^{ACK} correspond to the HARQ-ACK bits (SPS sub-codebooks) associated with the SPS, and respectively correspond to:
o₁₃^{ACK}: SPS release (1) of slot 1 of CC2,
o₁₄^{ACK}: SPS PDSCH (2, 2) associated with activation DCI of slot 2 of CC1,
o₁₅^{ACK}: SPS PDSCH in slot 1 of CC0,
o₁₆^{ACK}: SPS PDSCH in slot 3 of CC3.

Note that, in this example, the bit arrangement order of the SPS sub-codebooks is the order of the HARQ-ACK corresponding to the SPS release, the HARQ-ACK corresponding to the SPS PDSCH associated with the activation DCI, and the HARQ-ACK corresponding to the SPS PDSCH not associated with the activation DCI, but the present disclosure is not limited thereto, and an arbitrary order may be used.

The order of the sub-codebooks in the HARQ-ACK codebook is the order of the TB-based sub-codebook of the dynamic PDSCH, the CBG-based sub-codebook of the dynamic PDSCH, and the SPS sub-codebook, but is not limited thereto, and any order may be used. The same applies to other examples of the present disclosure.

As described above, according to Embodiment 1-3-1, the Type 2 HARQ-ACK codebook can be generated, for example, by using a sequence of bits in the order of the TB-based sub-codebook of the dynamic PDSCH, the CBG-based sub-codebook of the dynamic PDSCH, and the SPS sub-codebook. When the base station understands this construction order, there is no codebook inconsistency between the UE and the base station, and transmission and reception processing can be appropriately controlled.

### [Codebook generation based on Embodiment 1-3-2]

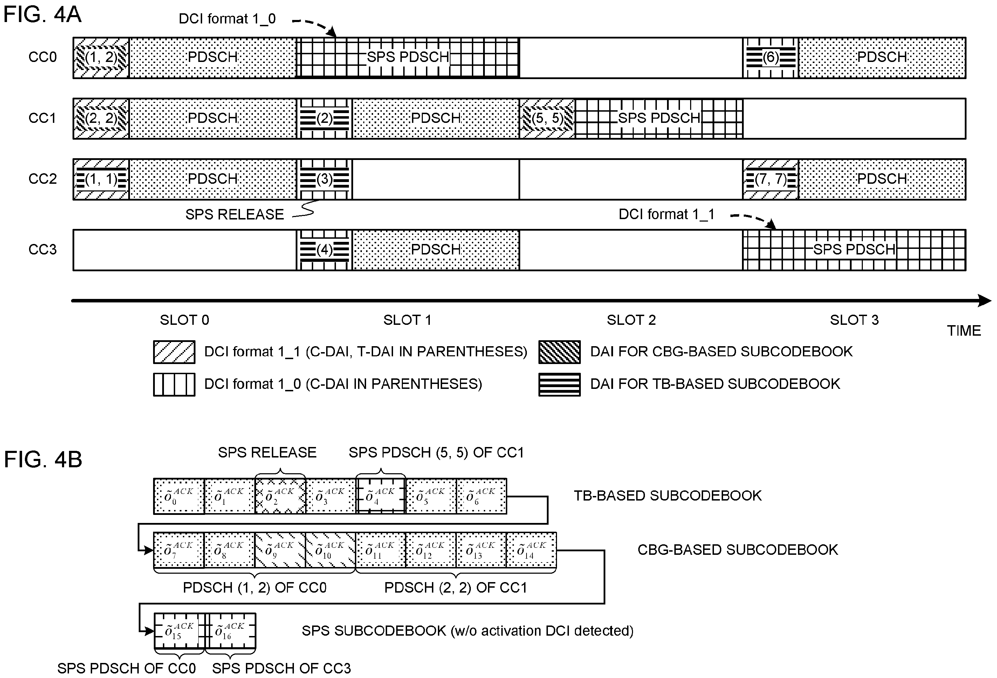

Figs. 4A and 4B are diagrams illustrating examples of the codebook generation based on Embodiment 1-3-1. Since Fig. 4A is the same as Fig. 2A, the same description will not be repeated. Hereinafter, only differences between Fig. 4B and Fig. 2B will be described, and the same description will not be repeated.

As discussed above, in Embodiment 1-3-2, the UE constructs the codebook to initially arrange the TB-based HARQ-ACK bits (the TB-based HARQ-ACK bits of the dynamic PDSCH and the HARQ-ACK bits corresponding to the SPS PDSCH and the SPS release associated with the activation DCI), subsequently arrange the CBG-based HARQ-ACK bits, and subsequently arrange the HARQ-ACK bits corresponding to the SPS PDSCH not associated with the activation DCI.

o₀^{ACK} to o₆^{ACK} in Fig. 4B may be the same as o₀^{ACK} to o₆^{ACK} in Fig. 2B. o₇^{ACK} to o₁₄^{ACK} in Fig. 4B may be the same as o₉^{ACK} to o₁₆^{ACK} in Fig. 2B. o₁₅^{ACK} and o₁₆^{ACK} in Fig. 4B may be the same as o₇^{ACK} and o₅^{ACK} in Fig. 2B. The HARQ-ACK bits corresponding to the SPS PDSCH not associated with the activation DCI may be referred to as the SPS sub-codebooks in which the activation DCI is not detected.

As described above, according to Embodiment 1-3-2, the Type 2 HARQ-ACK codebook may be generated, for example, by using a sequence of bits in the order of the TB-based sub-codebook, the CBG-based sub-codebook, and the SPS sub-codebook. When the base station understands this construction order, there is no codebook inconsistency between the UE and the base station, and transmission and reception processing can be appropriately controlled.

According to Embodiment 1 described above, the UE may generate the appropriate HARQ-ACK codebook even in a case where the CBG-based retransmission is not supported for the SPS.

### <Embodiment 2>

Embodiment 2 describes a case where the CBG-based retransmission is supported for the SPS.

In Embodiment 2, when the CBG-based transmission is configured for a given cell, the UE may assume that the TB-based transmission is applied to the SPS PDSCH of the cell associated with the activation DCI in the DCI format 1_0 (triggered by the DCI) and the CBG-based transmission is applied to the SPS PDSCH of the cell associated with the activation DCI in the DCI format 1_1.

The UE may assume that the HARQ-ACK feedback for the SPS PDSCH to which the TB-based transmission is applied is the TB-based HARQ-ACK feedback. The UE may assume that the HARQ-ACK feedback for the SPS PDSCH to which the CBG-based transmission is applied is the CBG-based HARQ-ACK feedback.

The HARQ-ACKs for the plurality of SPS PDSCHs may be multiplexed (included) into one HARQ-ACK codebook.

Embodiment 2 may be broadly divided into Embodiments 2-1 to 2-3 in terms of the determination of the codebook. Embodiment 2-3 may be further classified into Embodiment 2-3-1 and Embodiment 2-3-2.

In Embodiment 2-1, for the Type 1 HARQ-ACK codebook, the existing Rel-15 mechanism is used for determining the CBS. The UE may map the HARQ-ACK bits corresponding to, for example, the HARQ-ACK bits corresponding to the SPS PDSCH associated with the activation DCI and the SPS PDSCH and the SPS release not associated with the activation DCI to the HARQ-ACK codebook in the same manner as the HARQ-ACK bits corresponding to the dynamic PDSCH (for example, according to a list (table) related to the time domain resource allocation).

Note that, in a given cell, the number of HARQ-ACK bits corresponding to at least one of the SPS PDSCH associated with the activation DCI and the SPS PDSCH and the SPS release not associated with the activation DCI may be determined based on whether the CBG is configured for the cell in which the SPS is configured. For example, the number of bits may be one or X, and X may be the number of CBGs.

In Embodiment 2-2, the existing Rel-15 mechanism is used for determining the Type 2 HARQ-ACK codebook. For example, the UE may map the HARQ-ACK bits corresponding to the SPS PDSCH not associated with the activation DCI after the HARQ-ACK codebook corresponding to the dynamic TB-based PDSCH. The UE may map the HARQ-ACK bits corresponding to the SPS PDSCH and the SPS release associated with the activation DCI at locations derived from a value of at least one of the C-DAI and the T-DAI.

In Embodiment 2-3, the SPS sub-codebook is used for determining the Type 2 HARQ-ACK codebook.

In Embodiment 2-3-1, the UE may map, as the SPS sub-codebooks, the HARQ-ACK bits corresponding to the SPS PDSCH associated with the activation DCI and the SPS PDSCH and the SPS release not associated with the activation DCI after the HARQ-ACK sub-codebooks corresponding to the dynamic TB-based PDSCH and CBG-based PDSCH.

The SPS sub-codebooks of Embodiment 2-3-1 may include the TB-based sub-codebooks of the SPS and the CBG-based sub-codebooks of the SPS.

In Embodiment 2-3-2, the UE may map, as HARQ-ACK sub-codebooks for the SPS, the HARQ-ACK bits corresponding to the SPS PDSCH not associated with the activation DCI after the HARQ-ACK sub-codebooks corresponding to the dynamic TB-based PDSCH and CBG-based PDSCH. On the other hand, the UE may map the HARQ-ACK bits corresponding to the SPS PDSCH and the SPS release associated with the activation DCI at locations derived from a value of at least one of the C-DAI and the T-DAI.

Note that, for example, in Embodiments 2-2 and 2-3, in a given cell, the number of HARQ-ACK bits corresponding to at least one of the SPS PDSCH associated with the activation DCI and the SPS PDSCH and the SPS release not associated with the activation DCI may be determined based on the DCI format for the SPS PDSCH or the SPS release. For example, the number of bits may be one when the DCI format 1_0 is used, or may be X when the DCI format 1_1 is used (for example, X is the number of CBGs).

Hereinafter, specific generation of the Type 2 HARQ-ACK codebook of Embodiment 2 will be described. In Embodiment 2, the example of Fig. 1 is also used for description as an example of the assumption regarding the codebook generation.

The assumption of Embodiment 2 is different from the assumption of Embodiment 1 in that the CBG-based retransmission is supported for the SPS. The UE may assume that in the CBG-based cell, the SPS PDSCH (may correspond to at least one of the SPS PDSCH associated with the activation DCI and the SPS PDSCH not associated with the activation DCI) triggered by the activation DCI in the DCI format 1_1 is retransmitted on the CBG basis.

The UE may assume that in the CBG-based cell the SPS PDSCH (may correspond to at least one of the SPS PDSCH associated with the activation DCI and the SPS PDSCH not associated with the activation DCI) triggered by the activation DCI in the DCI format 1_0 is retransmitted on the TB basis.

The SPS PDSCH in the TB-based cell is retransmitted on the TB basis. Note that the UE may assume that the HARQ-ACK for the SPS release is constantly a given number of bits (for example, 1). The dynamic PDSCH is the same as the assumption of Embodiment 1.

### [Codebook generation based on Embodiment 2-2]

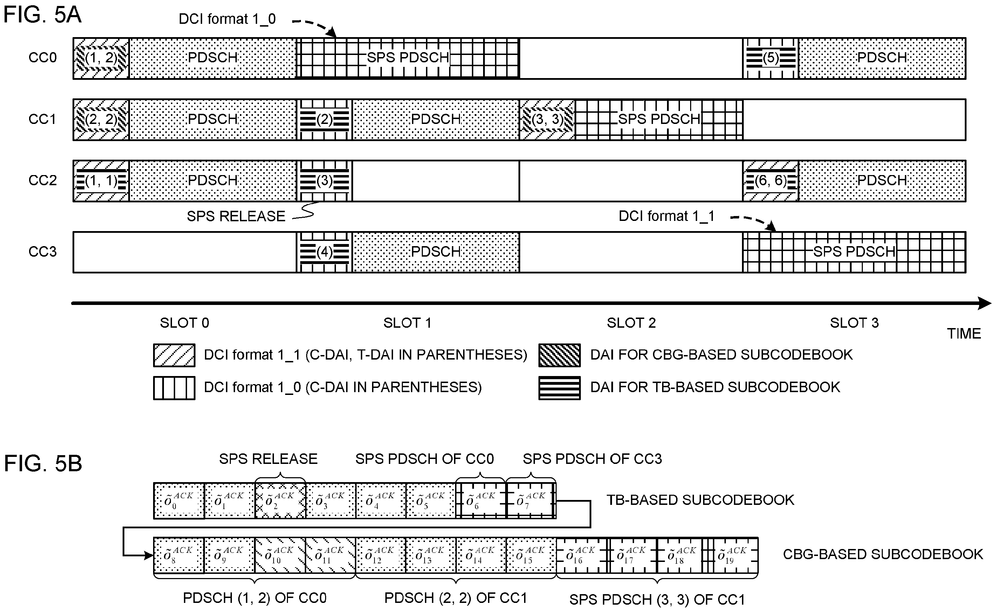

Figs. 5A and 5B are diagrams illustrating examples of the codebook generation based on Embodiment 2-2. Hereinafter, only differences between Fig. 5A and Fig. 2A will be described, and only differences between Fig. 5B and Fig. 5B will be described. The same description will not be repeated.

In Fig. 5A, the SPS PDSCH in the slot 1 of the CC0 is the SPS PDSCH of the CBG-based cell, but since the triggered DCI is the DCI format 1_0, the TB-based retransmission is applied (the corresponding HARQ-ACK is also on the TB basis).

In the SPS PDSCH in the slot 3 of the CC3, since the triggered DCI is the DCI format 1_1 but is the SPS PDSCH of the TB-based cell, the TB-based retransmission is applied (the corresponding HARQ-ACK is also on the TB based).

On the other hand, since the SPS PDSCH in the slot 2 of the CC1 is the SPS PDSCH of the CBG-based cell and the triggered DCI is the DCI format 1_1, the CBG-based retransmission is applied (the corresponding HARQ-ACK is also the CBG-based).

Thus, the DAI included in the DCI format 1_1 is counted as the DAI of the CBG-based sub-codebook, and corresponds to (C-DAI, T-DAI) = (3, 3) of the CBG-based sub-codebook. As the DAI is no longer counted, a value of a part of the DAIs for the TB-based sub-codebooks (DAI in a slot 4) is reduced.

Fig. 5B is a diagram illustrating a content of each bit in the HARQ-ACK codebook corresponding to Fig. 5A. In Fig. 5B, a total of 20 bits of o₀^{ACK} to o₁₉^{ACK} are illustrated.

As described above, in Embodiment 2-2, the UE constructs the codebook to initially arrange the TB-based HARQ-ACK bits and subsequently arrange the CBG-based HARQ-ACK bits. The HARQ-ACK bits corresponding to the SPS PDSCH not associated with the activation DCI are arranged at a tail portion of the TB-based HARQ-ACK bits.

The TB-based HARQ-ACK bits are arranged in the order from an earlier (lower) CC index and an earlier (lower) PDCCH monitoring period. That is, o₀^{ACK} to o₅^{ACK} correspond to:
o₀^{ACK}: PDSCH (1, 2) in slot 0 of CC2,
o₁^{ACK}: PDSCH (2, 2) in slot 1 of CC1,
o₂^{ACK}: SPS release (3) of slot 1 of CC2,
o₃^{ACK}: PDSCH (4) in slot 1 of CC3,
o₄^{ACK}: PDSCH (5) in slot 3 of CC0,
o₅^{ACK}: PDSCH (6, 6) in slot 3 of CC2.

o₆^{ACK} corresponds to the SPS PDSCH in the slot 1 of the CC0, and o₇^{ACK} corresponds to the SPS PDSCH in the slot 3 of the CC3. These bits correspond to the HARQ-ACK bits corresponding to the SPS PDSCH not associated with the activation DCI.

o₈^{ACK} to o₁₁^{ACK} correspond to the PDSCH (1, 2) of the slot 0 of the CC0, o₁₂^{ACK} to o₁₅^{ACK} correspond to the PDSCH (2, 2) of the slot 0 of the CC1, and o₁₆^{ACK} to o₁₉^{ACK} correspond to the SPS PDSCH (3, 3) associated with the activation DCI of the slot 2 of the CC1.

As described above, according to Embodiment 2-2, the Type 2 HARQ-ACK codebook may be generated, for example, by using a sequence of bits in the order of the TB-based sub-codebook and the CBG-based sub-codebook. When the base station understands this construction order, there is no codebook inconsistency between the UE and the base station, and transmission and reception processing can be appropriately controlled.

### [Codebook generation based on Embodiment 2-3-1]

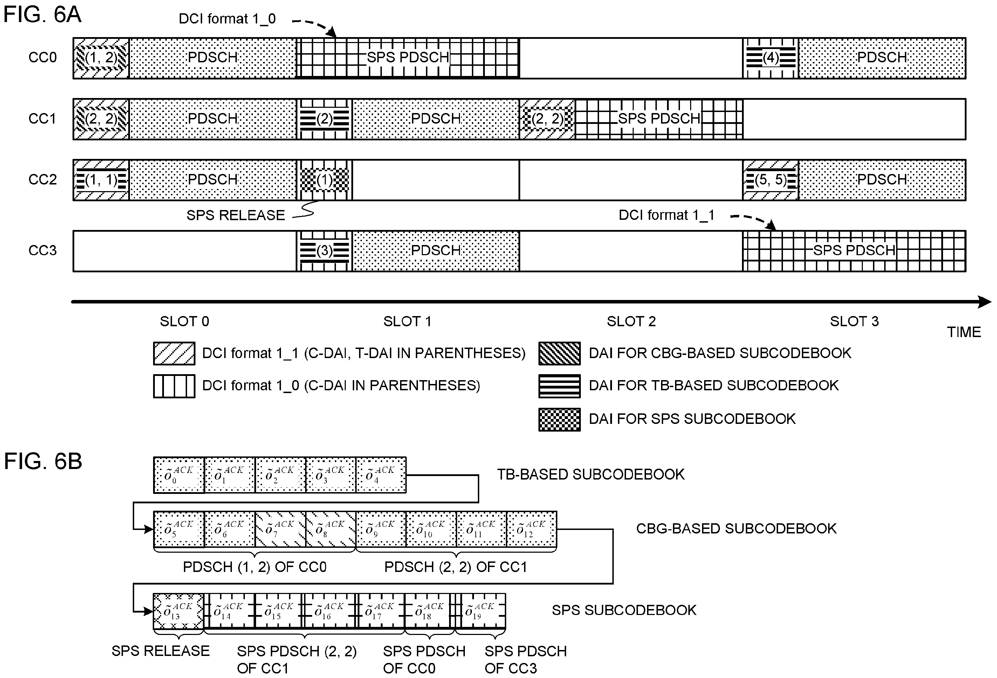

Figs. 6A and 6B are diagrams illustrating examples of the codebook generation based on Embodiment 2-3-1. Hereinafter, only differences between Fig. 6A and Fig. 5A will be described, and only differences between Fig. 6B and Fig. 5B will be described. The same description will not be repeated.

In Fig. 6A, the DAI for the SPS sub-codebook is illustrated. The SPS release in the slot 1 of the CC2 corresponds to C-DAI = 1 of the SPS sub-codebook, and the activation DCI in the slot 2 of the CC1 corresponds to (C-DAI, T-DAI) = (2, 2) of the SPS sub-codebook. As these DAIs are no longer counted, a value of a part of the DAIs for the TB-based sub-codebooks is reduced.

As described above, in Embodiment 2-3-1, the UE constructs the codebook to initially arrange the TB-based HARQ-ACK bits of the dynamic PDSCH, subsequently arrange the CBG-based HARQ-ACK bits of the dynamic PDSCH, and subsequently arrange the HARQ-ACK bits associated with the SPS.

o₀^{ACK} to o₄^{ACK} correspond to the TB-based HARQ-ACK bits of the dynamic PDSCH, and respectively correspond to:
o₀^{ACK}: PDSCH (1, 2) in slot 0 of CC2,
o₁^{ACK}: PDSCH (2, 2) in slot 1 of CC1,
o₂^{ACK}: PDSCH (3) in slot 1 of CC3,
o₃^{ACK}: PDSCH (4) in slot 3 of CC0,
o₄^{ACK}: PDSCH (5, 5) in slot 3 of CC2.

o₅^{ACK} to o₁₂^{ACK} correspond to the CBG-based HARQ-ACK bits of the dynamic PDSCH. o₅^{ACK} to o₅^{ACK} correspond to the PDSCH (1, 2) of the slot 0 of the CC0, and o₉^{ACK} to o₁₂^{ACK} correspond to the PDSCH (2, 2) of the slot 0 of the CC1.

o₁₃^{ACK} to o₁₉^{ACK} correspond to the HARQ-ACK bits (SPS sub-codebooks) associated with the SPS, and respectively correspond to:
o₁₃^{ACK}: SPS release (1) of slot 1 of CC2,
o₁₄^{ACK} to o₁₇^{ACK}: SPS PDSCH (2, 2) associated with activation DCI of slot 2 of CC1,
o₁₈^{ACK}: SPS PDSCH in slot 1 of CC0,
o₁₉^{ACK}: SPS PDSCH in slot 3 of CC3.

Note that, in this example, the bit arrangement order of the SPS sub-codebooks is the order of the HARQ-ACK corresponding to the SPS release, the HARQ-ACK corresponding to the SPS PDSCH associated with the activation DCI, and the HARQ-ACK corresponding to the SPS PDSCH not associated with the activation DCI, but the present disclosure is not limited thereto, and an arbitrary order may be used.

As described above, according to Embodiment 2-3-1, the Type 2 HARQ-ACK codebook may be generated, for example, by using a sequence of bits in the order of the TB-based sub-codebook of the dynamic PDSCH, the CBG-based sub-codebook of the dynamic PDSCH, and the SPS sub-codebook. When the base station understands this construction order, there is no codebook inconsistency between the UE and the base station, and transmission and reception processing can be appropriately controlled.

### [Codebook generation based on Embodiment 2-3-2]

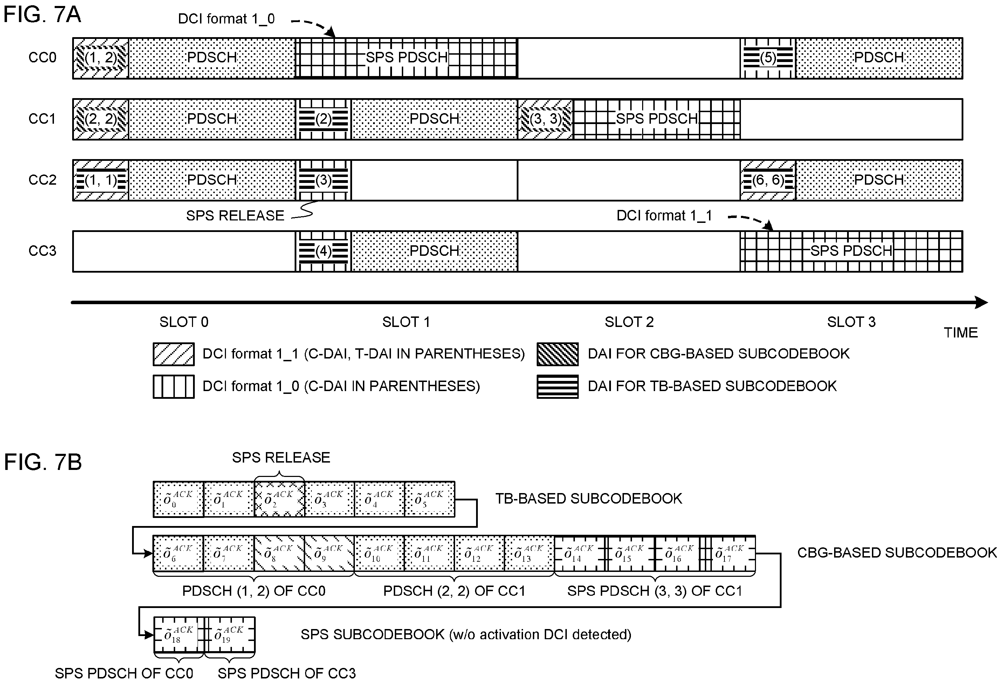

Figs. 7A and 7B are diagrams illustrating examples of the codebook generation based on Embodiment 2-3-1. Since Fig. 7A is the same as Fig. 5A, the same description will not be repeated. Hereinafter, only differences between Fig. 7B and Fig. 5B will be described, and the same description will not be repeated.

As discussed above, in Embodiment 2-3-2, the UE constructs the codebook to initially arrange the TB-based HARQ-ACK bits (the TB-based HARQ-ACK bits of the dynamic PDSCH and the HARQ-ACK bits corresponding to the SPS PDSCH and the SPS release associated with the activation DCI), subsequently arrange the CBG-based HARQ-ACK bits, and subsequently arrange the HARQ-ACK bits corresponding to SPS PDSCH not associated with the activation DCI.

o₀^{ACK} to o₅^{ACK} in Fig. 7B may be the same as o₀^{ACK} to o₅^{ACK} in Fig. 5B. o₆^{ACK} to o₁₇^{ACK} in Fig. 7B may be the same as o₅^{ACK} to o₁₉^{ACK} in Fig. 5B. o₁₈^{ACK} to o₁₉^{ACK} in Fig. 7B may be the same as o₆^{ACK} to o₇^{ACK} in Fig. 5B. The HARQ-ACK bits corresponding to the SPS PDSCH not associated with the activation DCI may be referred to as the SPS sub-codebooks in which the activation DCI is not detected.

As described above, according to Embodiment 2-3-2, the Type 2 HARQ-ACK codebook may be generated, for example, by using a sequence of bits in the order of the TB-based sub-codebook, the CBG-based sub-codebook, and the SPS sub-codebook. When the base station understands this construction order, there is no codebook inconsistency between the UE and the base station, and transmission and reception processing can be appropriately controlled.

According to Embodiment 2 described above, the UE can generate the appropriate HARQ-ACK codebook even in a case where the CBG-based retransmission is supported for the SPS.

### (Radio Communication System)

Hereinafter, a configuration of a radio communication system according to one embodiment of the present disclosure will be described. In the radio communication system, communication is performed by using one or a combination of the above-described radio communication methods according to the embodiments of the present disclosure.

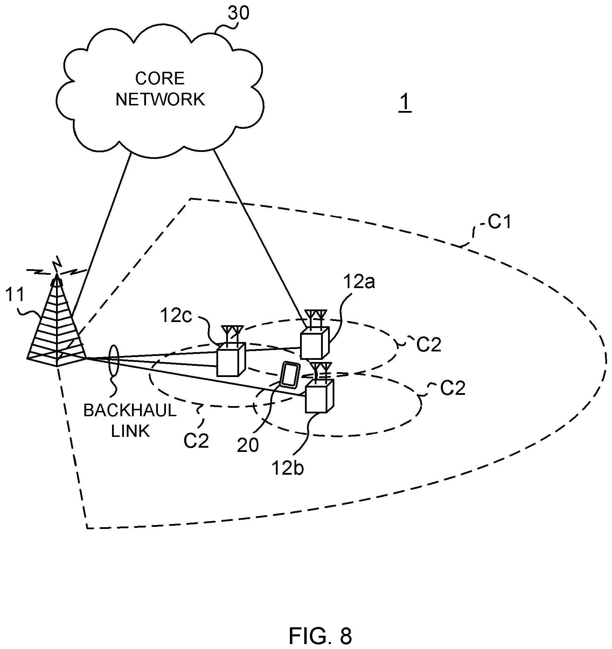

Fig. 8 is a diagram illustrating an example of a schematic configuration of a radio communication system according to one embodiment. A radio communication system 1 may be a system that implements communication using Long Term Evolution (LTE), 5th generation mobile communication system New Radio (5G NR), and the like specifies by Third Generation Partnership Project (3GPP).

The radio communication system 1 may support dual connectivity (multi-RAT dual connectivity (MR-DC)) between a plurality of pieces of radio access technology (RAT). The MR-DC may include dual connectivity between LTE (Evolved Universal Terrestrial Radio Access (E-UTRA)) and NR (E-UTRA-NR Dual Connectivity (EN-DC)), dual connectivity between NR and LTE (NR-E-UTRA Dual Connectivity (NE-DC)), and the like.

In EN-DC, an LTE (E-UTRA) base station (eNB) is a master node (MN), and an NR base station (gNB) is a secondary node (SN). In NE-DC, the NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminal 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (Frequency Range 1 (FR1)) and a second frequency range 2 (Frequency Range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and FR1 may correspond to a frequency range higher than FR2, for example.

The user terminal 20 may perform communication in each CC by using at least one of time division duplex (TDD) and frequency division duplex (FDD).

The plurality of base stations 10 may be connected by wire (for example, an optical fiber in compliance with common public radio interface (CPRI) or an X2 interface) or by radio (for example, NR communication). For example, when NR communication is used as backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as UL and DL radio access methods.

In the radio communication system 1, a downlink shared channel(physical downlink shared channel (PDSCH)) shared by each user terminal 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, and a system information block (SIB)), and the like are transmitted by the PDSCH. User data, higher layer control information, and the like may be transmitted by the PUSCH. Master information block (MIB) may be transmitted by the PBCH.

Lower layer control information may be transmitted by the PDCCH. The lower layer control information may include, for example, downlink control information (DCI) including scheduling information of at least one of the PDSCH and the PUSCH.

Note that, the DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space on the basis of the search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, Hybrid Automatic Repeat reQuest ACKnowledgement (HARQ-ACK), ACK/NACK, or the like), scheduling request (SR), and the like may be transmitted by the PUCCH. A random access preamble for establishing a connection with a cell may be transmitted by the PRACH.

Note that, in the present disclosure, downlink, uplink, and the like may be expressed without "link". Furthermore, various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Furthermore, in the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)".

### (Base Station)

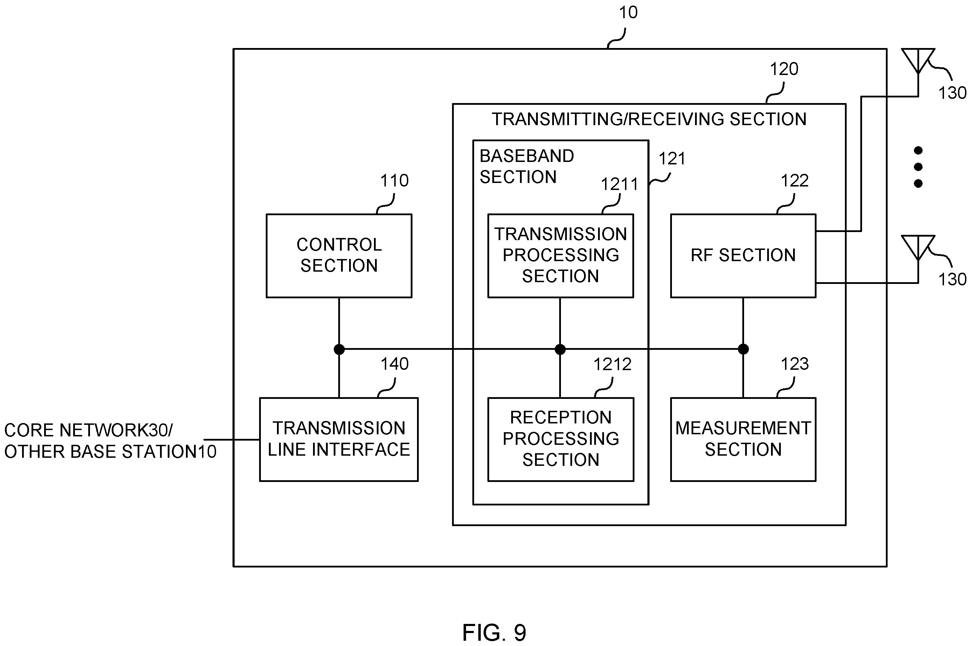

Fig. 9 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that, the example mainly describes functional blocks of characteristic parts in the embodiment, and it may be assumed that the base station 10 also includes other functional blocks that are necessary for radio communication. A part of processing of each section described below may be omitted.

The control section 110 controls the entire base station 10. The control section 110 can include a control section, a control circuit, and the like that are described on the basis of common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, management of a radio resource and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like that are described on the basis of common recognition in the technical field related to the present disclosure.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can include an antenna described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction coding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency range, filtering processing, amplification, and the like on the baseband signal, and may transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like on the basis of the received signal. The measurement section 123 may measure received power (for example, reference signal received power (RSRP)), reception quality (for example, reference signal reception quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus, another base station 10, or the like included in the core network 30, and may perform acquisition, transmission, or the like of user data (user plane data), control plane data, and the like for the user terminal 20.

Note that the transmitting section and the receiving section of the base station 10 in the present disclosure may be constituted by at least one of the transmitting/receiving section 120, the transmission/reception antenna 130, and the transmission line interface 140.

Note that the transmitting/receiving section 120 may receive HARQ-ACK information bits corresponding to a HARQ-ACK codebook including a first Hybrid Automatic Repeat reQuest ACKnowledgement (HARQ-ACK) sub-codebook related to a transport block (TB)-based physical downlink shared channel (PDSCH), a second HARQ-ACK sub-codebook related to a code block group (CBG)-based PDSCH, and a third HARQ-ACK sub-codebook related to semi-persistent scheduling (SPS) by using one uplink control channel (PUCCH).

### (User Terminal)

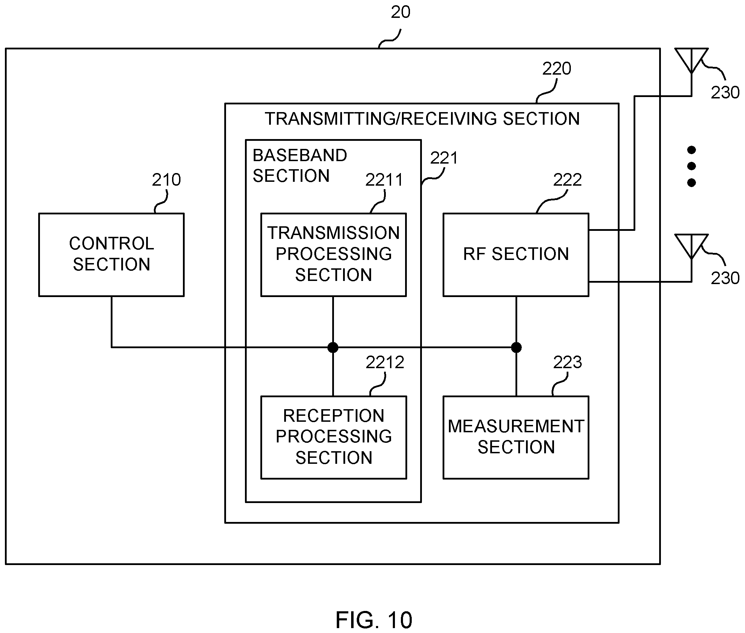

Fig. 10 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, the example mainly describes functional blocks of characteristic parts in the embodiment, and it may be assumed that the user terminal 20 also includes other functional blocks necessary for radio communication. A part of processing of each section described below may be omitted.

The control section 210 controls the entire user terminal 20. The control section 210 can include a control section, a control circuit, or the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmitting/receiving circuit, and the like, which are described on the basis of common recognition in the technical field related to the present disclosure.

The transmitting/receiving section 220 may be constituted as an integrated transmitting/receiving section, or may be constituted by a transmitting section and a receiving section. The transmitting section may be constituted by the transmission processing section 2211 and the RF section 222. The receiving section may be constituted by the reception processing section 2212, the RF section 222, and the measurement section 223.

The transmission/reception antenna 230 can be constituted by an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction coding), modulation, mapping, filtering processing, DFT processing (if necessary), IFFT processing, precoding, or digital-analog transform on a bit string to be transmitted, and may output a baseband signal.

Note that whether or not to apply DFT processing may be based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like on the basis of the received signal. The measurement section 223 may measure reception power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 and the transmission/reception antenna 230.

Note that the control section 210 may generate a HARQ-ACK codebook including a first Hybrid Automatic Repeat reQuest ACKnowledgement (HARQ-ACK) sub-codebook related to a transport block (TB)-based physical downlink shared channel (PDSCH), a second HARQ-ACK sub-codebook related to a code block group (CBG)-based PDSCH, and a third HARQ-ACK sub-codebook related to semi-persistent scheduling (SPS).

The transmitting/receiving section 220 may transmit the HARQ-ACK information bits corresponding to the HARQ-ACK codebook by using one uplink control channel (PUCCH). Note that the HARQ-ACK information bits corresponding to the HARQ-ACK codebook may be transmitted on the PUSCH, or may be transmitted by using a combination of the PUCCH and the PUSCH.

The control section 210 may be configured to set the third HARQ-ACK sub-codebook to include the HARQ-ACK corresponding to the SPS release, the HARQ-ACK corresponding to the SPS PDSCH (the downlink shared channel based on the configuration of the semi-persistent scheduling) associated with the downlink control information (SPS activation DCI) for the SPS activation, and the HARQ-ACK corresponding to the SPS PDSCH not associated with the downlink control information for the SPS activation.

For example, the third HARQ-ACK sub-codebook may include all the HARQ-ACKs corresponding to the SPS release, the HARQ-ACKs corresponding to the SPS PDSCH associated with the SPS activation DCI, and the HARQ-ACKs corresponding to the SPS PDSCH not associated with the SPS activation DCI.

The control section 210 is configured to set at least one of the first HARQ-ACK sub-codebook and the second HARQ-ACK sub-codebook to include the HARQ-ACK corresponding to the SPS release or the HARQ-ACK corresponding to the SPS PDSCH associated with the SPS activation DCI, and be configured such that the third HARQ-ACK sub-codebook includes the HARQ-ACK corresponding to the SPS PDSCH not associated with the SPS activation DCI.

For example, the third HARQ-ACK sub-codebook includes only the HARQ-ACKs corresponding to the SPS PDSCH not associated with the SPS activation DCI.

In the cell (CBG cell) in which the CBG-based PDSCH is configured, the control section 210 may assume that the CBG-based transmission is applied to the SPS (SPS PDSCH) activated by a specific downlink control information format (for example, DCI format 1_1), but the TB-based transmission is applied to the SPS (for example, SPS activated by DCI format 1_0) not activated.

### (Hardware Configuration)

Note that the block diagrams that have been used to describe the above embodiments illustrate blocks in functional units. These functional blocks (configuration sections) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (using wires, radio, or the like, for example) and using these plural apparatuses. The functional blocks may be achieved by combining the one apparatus or the plurality of apparatuses with software.

Here, the functions include, but are not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration section) that causes transmission to function may be called as a transmitting unit, a transmitter, and the like. In any case, as described above, the implementation method is not particularly limited.

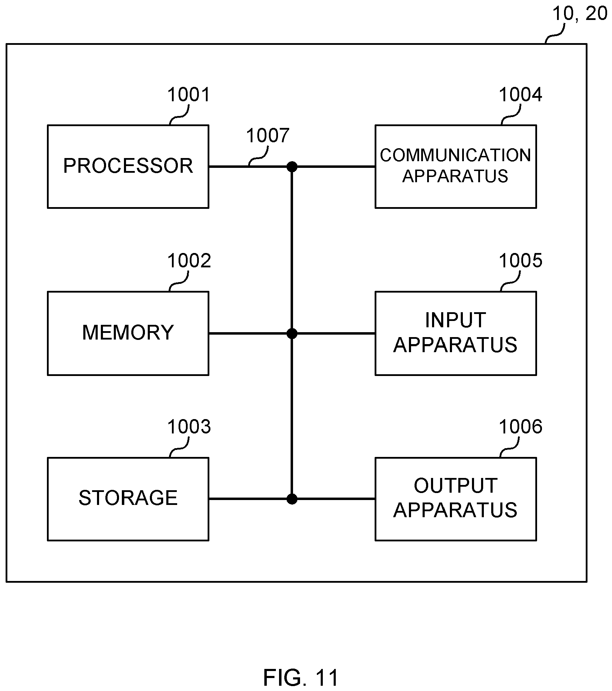

For example, the base station, the user terminal, and the like according to one embodiment of the present disclosure may function as a computer that executes the processing of the radio communication method of the present disclosure. Fig. 11 is a diagram illustrating an example of a hardware configuration of the base station and the user terminal according to one embodiment. The above-described base station 10 and user terminal 20 may be physically configured as a computer apparatus including a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, or a unit can be replaced with each other. The hardware configuration of the base station 10 and the user terminal 20 may be designed to include one or a plurality of each apparatuses illustrated in the drawings, or may be designed not to include some apparatuses.

For example, although only one processor 1001 is illustrated, a plurality of processors may be provided. Further, the processing may be executed by one processor, or the processing may be executed simultaneously, in sequence, or in different manners, by two or more processors. Note that the processor 1001 may be implemented with one or more chips.

Each function of the base station 10 and the user terminal 20 is implemented by reading given software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may include a central processing unit (CPU) including an interface with peripheral equipment, a control apparatus, an arithmetic apparatus, a register, and the like. For example, at least a part of the above-described control section 110 (210), transmitting/receiving section 120 (220), and the like may be implemented by the processor 1001.

Furthermore, the processor 1001 reads, for example, programs (program codes), software modules, or data from at least one of the storage 1003 and the communication apparatus 1004 into the memory 1002, and executes various kind of processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include at least one of, for example, a read only memory (ROM), an erasable programmable ROM (EPROM), an electrically EPROM (EEPROM), a random access memory (RAM) and/or other appropriate storage media. The memory 1002 may be referred to as a "register", a "cache", a "main memory (main storage apparatus)", and the like. The memory 1002 can store a program (program code), a software module, and the like, which are executable for implementing the radio communication method according to one embodiment of the present disclosure.

The storage 1003 is a computer-readable recording medium, and may include at least one of, for example, a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as "an auxiliary storage apparatus".

The communication apparatus 1004 is hardware (transmitting/receiving device) for performing inter-computer communication via at least one of a wired network or a radio network, and is referred to as, for example, a network device, a network controller, a network card, and a communication module. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating a transmitting section 120a (220a) and a receiving section 120b (220b) from each other.

The input apparatus 1005 is an input device that receives an input from outside (for example, a keyboard, a mouse, a microphone, a switch, a button, a sensor, and the like). The output apparatus 1006 is an output device for performing outputting to the outside (for example, a display, a speaker, a light emitting diode (LED) lamp, and the like). Note that the input apparatus 1005 and the output apparatus 1006 may be an integrated configuration (for example, a touch panel).

Furthermore, those pieces of apparatuses including the processor 1001, the memory 1002 and so on are connected by the bus 1007 for communicating information. The bus 1007 may be formed with a single bus, or may be formed with buses that vary between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and a part or all of each functional block may be implemented by the hardware. For example, the processor 1001 may be implemented with at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. Further, the signal may be a message. A reference signal can be abbreviated as an "RS", and may be referred to as a "pilot", a "pilot signal", and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a "subframe". Furthermore, a subframe may be constituted by one or a plurality of slots in the time domain. A subframe may be a fixed time duration (for example, 1 ms) that is not dependent on numerology.

Here, the numerology may be a communication parameter applied to at least one of transmission and reception of a signal or a channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in the time domain, and the like.

The slot may include one or a plurality of symbols **(e.g.,** orthogonal frequency division multiplexing (OFDM) symbol and single carrier frequency division multiple access (SC-FDMA) symbol) in the time domain. In addition, a slot may be a time unit based on numerology.

A slot may include a plurality of mini slots. Each mini slot may be constituted by one or a plurality of symbols in the time domain. Further, a mini slot may be referred to as a "subslot". Each mini slot may be constituted by fewer symbols than a slot. A PDSCH (or PUSCH) transmitted in a time unit larger than a mini slot may be referred to as PDSCH (PUSCH) mapping type **A. A** PDSCH (or PUSCH) transmitted using a mini slot may be called PDSCH (PUSCH) mapping type **B.**

A radio frame, a subframe, a slot, a mini slot and a symbol all represent the time unit in signal communication. The radio frame, the subframe, the slot, the mini slot, and the symbol may be each called by other applicable names. Note that time units such as a frame, a subframe, a slot, a mini slot, and a symbol in the present disclosure may be replaced with each other.

For example, one subframe may be referred to as TTI. A plurality of consecutive subframes may be referred to as TTI. One slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", and so on, instead of a "subframe".

Here, a TTI refers to the minimum time unit of scheduling in radio communication, for example. For example, in the LTE system, a base station performs scheduling to allocate radio resources (a frequency bandwidth and transmission power that can be used in each user terminal and the like) to each user terminal in TTI units. Note that the definition of TTIs is not limited to this.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a "TTI", one or more TTIs (that is, one or multiple slots or one or more mini slots) may be the minimum time unit of scheduling. In addition, the number of slots (the number of mini slots) to constitute this minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a normal TTI, a subframe, or the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined on the basis of numerology.

In addition, an RB may include one or more symbols in the time domain, and may be one slot, one mini slot, one subframe or one TTI in length. One TTI, one subframe, and the like each may be comprised of one or more resource blocks.

Note that one or a plurality of RBs may be referred to as a physical resource block (PRB (Physical RB)), a subcarrier group (SCG (Sub-Carrier Group)), a resource element group (REG), a PRB pair, an RB pair, or the like.

Furthermore, a resource block may be constituted by one or a plurality of resource elements (REs). For example, one RE may be a radio resource domain of one subcarrier and one symbol.

A bandwidth part (BWP) (which may be called partial bandwidth or the like) may represent a subset of consecutive common resource blocks (RBs) for a certain numerology in a certain carrier. Here, the common RB may be specified by an RB index with reference to a common reference point of the carrier. The PRB may be defined in a BWP and be numbered within that BWP.

The BWP may include BWP for UL (UL BWP) and BWP for DL (DL BWP). For the UE, one or a plurality of BWPs may be configured within one carrier.

At least one of the configured BWPs may be active, and the UE may not assume to transmit ore receive a given signal/channel outside the active BWP. Note that a "cell", a "carrier", or the like in the present disclosure may be read as a "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other applicable information. For example, a radio resource may be specified by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from upper layers to lower layers and a direction from lower layers to upper layers. Information, signals and so on may be input and output via a plurality of network nodes.

The information, signals and so on that are input and/or output may be stored in a specific location (for example, in a memory), or may be managed in a management table. The information, signal, and the like to be input and/or output can be overwritten, updated, or appended. The output information, signal, and the like may be deleted. The information, signals, and so on that are input may be transmitted to other apparatuses.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

In addition, notification of given information (for example, notification of information to the effect that "X holds") does not necessarily have to be sent explicitly, and may be sent implicitly (for example, by not reporting the given information, by reporting another piece of information, and so on).

Determination may be made in values represented by one bit (0 or 1), may be made in Boolean values represented by true or false, or may be made by comparing numerical values (for example, comparison against a given value).

Software, whether referred to as "software", "firmware", "middleware", "microcode", or "hardware description language" or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

In addition, software, commands, information and so on may be transmitted and received via communication media. For example, when software is transmitted from a website, a server, or another remote source by using at least one of a wired technology (coaxial cable, optical fiber cable, twisted pair cable, digital subscriber line (DSL), or the like) and a wireless technology (infrared light, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "Quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (for example, indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a vehicle (for example, a car, an airplane and the like), an unmanned moving object (for example, a drone, an autonomous car, and the like), or a (manned or unmanned) robot. Note that at least one of the base station and the mobile station includes an apparatus that does not necessarily move during a communication operation. For example, at least one of the base station and the mobile station may be Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In the case, the user terminal 20 may have the function of the above-mentioned base station 10. In addition, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" (or "based on") as used in the present disclosure does not mean "only on the basis of" (or "based only on"), unless otherwise specified. In other words, the phrase "on the basis of" means both "only on the basis of" (or "based only on") and "at least on the basis of" (or "based at least of".)

Any reference to an element using designations such as "first" and "second" used in the present disclosure does not generally limit the number/quantity or order of these elements. These designations may be used in the present disclosure as a method convenient in distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some action.

Further, "determining" may be replaced with "assuming", "expecting", "considering", and the like.

The "maximum transmission power" described in the present disclosure may mean a maximum value of transmission power, the nominal UE maximum transmit power, or the rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in the radio frequency, microwave, and optical (both visible and invisible) domains, or the like.

In the present disclosure, the phrase "A and B are different" may mean "A and B are different from each other". Note that the phrase may mean that "A and B are different from C". The terms such as "leave", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

The scope of invention is defined by the appended claims.

## Claims

1. A terminal (20) comprising:
a control section (210) configured to generate a Hybrid Automatic Repeat reQuest ACKnowledgement , HARQ-ACK, codebook including a first HARQ-ACK sub-codebook related to transport block, TB, -based physical downlink shared channel, PDSCH , a second HARQ-ACK sub-codebook related to code block group , CBG, -based PDSCH, and a third HARQ-ACK sub-codebook related to semi-persistent scheduling, SPS ; and
a transmitting section (220) configured to transmit HARQ-ACK information corresponding to the HARQ-ACK codebook by using one physical uplink control channel, PUCCH;
**characterized in that** the control (210) section is further configured to:
configure the first HARQ-ACK sub-codebook to include HARQ-ACK corresponding to SPS release or HARQ-ACK corresponding to SPS PDSCH related to downlink control information for SPS activation, and
configure the third HARQ-ACK sub-codebook to include HARQ-ACK corresponding to SPS PDSCH not related to the downlink control information for the SPS activation.

2. The terminal according to claim 1, wherein the control section (210) is further configured to allocate the third HARQ-ACK sub-codebook after the first HARQ-ACK sub-codebook in the HARQ-ACK codebook.

3. A radio communication method of a terminal, comprising:
generating a Hybrid Automatic Repeat reQuest ACKnowledgement, HARQ-ACK, codebook including a first HARQ-ACK sub-codebook related to transport block , TB, -based physical downlink shared channel, PDSCH, a second HARQ-ACK sub-codebook related to code block group , CBG, -based PDSCH, a third HARQ-ACK sub-codebook related to semi-persistent scheduling, SPS ; and
transmitting HARQ-ACK information corresponding to the HARQ-ACK codebook by using one physical uplink control channel, PUCCH;
**characterized in that** the first HARQ-ACK sub-codebook is configured to include HARQ-ACK corresponding to SPS release or HARQ-ACK corresponding to SPS PDSCH related to downlink control information for SPS activation, and
the third HARQ-ACK sub-codebook is configured to include HARQ-ACK corresponding to SPS PDSCH not related to the downlink control information for the SPS activation.

4. A base station (10) comprising:
a receiving section (120) configured to receive, by using one physical uplink control channel, PUCCH, a Hybrid Automatic Repeat reQuest ACKnowledgement , HARQ-ACK, information corresponding to a HARQ-ACK codebook including a first HARQ-ACK sub-codebook related to transport block, TB, -based physical downlink shared channel, PDSCH, , a second HARQ-ACK sub-codebook related to code block group, CBG, -based PDSCH, and a third HARQ-ACK sub-codebook related to semi-persistent scheduling, SPS; and
a control section (110) configured to perform a retransmission based on the HARQ-ACK information;
**characterized in that** the first HARQ-ACK sub-codebook is configured to include HARQ-ACK corresponding to SPS release or HARQ-ACK corresponding to SPS PDSCH related to downlink control information for SPS activation, and
the third HARQ-ACK sub-codebook is configured to include HARQ-ACK corresponding to SPS PDSCH not related to the downlink control information for the SPS activation.

5. A system comprising a terminal (20) according to claim 1 and a base station (10) according to claim 4.

## Patentansprüche

1. Endgerät (20), umfassend:
einen Steuerabschnitt (210), der so konfiguriert ist, dass er ein Hybrid Automatic Repeat reQuest ACKnowledgement, HARQ-ACK, Codebuch generiert, einschließlich eines ersten HARQ-ACK-Teilcodebuchs, das sich auf einen Transportblock (TB) auf der Basis eines gemeinsam genutzten physikalischen Downlink-Kanals (PDSCH) bezieht, eines zweiten HARQ-ACK-Teilcodebuchs, das sich auf eine Codeblockgruppe (CBG) auf der Basis von PDSCH bezieht, und eines dritten HARQ-ACK-Teilcodebuchs, das sich auf ein semi-persistentes Scheduling (SPS) bezieht; und einen Übertragungsabschnitt (220), der so konfiguriert ist, dass er HARQ-ACK-Informationen, die dem HARQ-ACK-Codebuch entsprechen, unter Verwendung eines physikalischen Uplink-Kontrollkanals (PUCCH) überträgt;
**dadurch gekennzeichnet, dass** der Steuerabschnitt (210) ferner zu Folgendem konfiguriert ist:
Konfigurieren des ersten HARQ-ACK-Teilcodebuchs zum Einschließen von HARQ-ACK, die der SPS-Aktivierung entsprechen, oder von HARQ-ACK, die SPS PDSCH entsprechen, die sich auf Downlink-Steuerinformationen für die SPS-Aktivierung beziehen, und
Konfigurieren des dritten HARQ-ACK-Teilcodebuchs zum Einschließen von HARQ-ACK, die SPS PDSCH entsprechen, die sich nicht auf die Downlink-Steuerinformationen für die SPS-Aktivierung beziehen.

2. Endgerät nach Anspruch 1, wobei der Steuerabschnitt (210) ferner so konfiguriert ist, dass er das dritte HARQ-ACK-Teilcodebuch nach dem ersten HARQ-ACK-Teilcodebuch in dem HARQ-ACK-Codebuch zuweist.

3. Funkkommunikationsverfahren eines Endgerätes, umfassend:
Generieren eines Hybrid Automatic Repeat reQuest Acknowledgement Codebuchs (HARQ-ACK), einschließlich eines ersten HARQ-ACK-Teilcodebuchs, das sich auf einen Transportblock (TB) auf der Basis eines gemeinsam genutzten physikalischen Downlink-Kanals (PDSCH) bezieht; eines zweiten HARQ-ACK-Teilcodebuchs, das sich auf eine Codeblockgruppe (CBG)
auf der Basis von PDSCH bezieht; eines dritten HARQ-ACK-Teilcodebuchs, das sich auf ein semi-persistentes Scheduling (SPS) bezieht; und Übertragen von HARQ-ACK-Informationen, die dem HARQ-ACK-Codebuch entsprechen, unter Verwendung eines physikalischen Uplink-Steuerkanals, PUCCH; **dadurch gekennzeichnet, dass** das erste HARQ-ACK-Teilcodebuch so konfiguriert ist, dass es HARQ-ACK entsprechend SPS-Freigabe oder HARQ-ACK entsprechend SPS PDSCH einschließt, die sich auf Downlink-Steuerinformationen für SPS-Aktivierung beziehen, und
wobei das dritte HARQ-ACK- Teilcodebuch so konfiguriert ist, dass es HARQ-ACK einschließt, die SPS PDSCH entsprechen, die sich nicht auf die Downlink-Steuerinformationen für die SPS-Aktivierung beziehen.

4. Basisstation (10), umfassend:
einen Empfangsabschnitt (120), der so konfiguriert ist, dass er unter Verwendung eines physikalischen Uplink-Steuerkanals PUCCH eine HARQ-ACK-Information (Hybrid Automatic Repeat Request ACKnowledgement) empfängt, die einem HARQ-ACK-Codebuch entspricht, einschließlich eines ersten HARQ-ACK-Teilcodebuchs, das sich auf einen Transportblock (TB)
auf der Basis eines gemeinsam genutzten physikalischen Downlink-Kanals (PDSCH) bezieht; eines zweiten HARQ-ACK-Teilcodebuchs, das sich auf eine Codeblockgruppe (CBG)
auf der Basis von PDSCH bezieht, und eines dritten HARQ-ACK-Teilcodebuchs, das sich auf ein semi-persistentes Scheduling (SPS) bezieht; und
einen Steuerabschnitt (110), der so konfiguriert ist, dass er eine erneute Übertragung auf der Grundlage der HARQ-ACK-Informationen durchführt; **dadurch gekennzeichnet, dass** das erste HARQ-ACK-Teilcodebuch so konfiguriert ist, dass es HARQ-ACK entsprechend SPS-Freigabe oder HARQ-ACK entsprechend SPS PDSCH einschließt, die sich auf Downlink-Steuerinformationen für SPS-Aktivierung beziehen, und
wobei das dritte HARQ-ACK- Teilcodebuch so konfiguriert ist, dass es HARQ-ACK einschließt, die SPS PDSCH entsprechen, die sich nicht auf die Downlink-Steuerinformationen für die SPS-Aktivierung beziehen.

5. System, das ein Endgerät (20) nach Anspruch 1 und eine Basisstation (10) nach Anspruch 4 umfasst.

## Revendications

1. Terminal (20) comprenant :
une section de commande (210) configurée pour générer un livre de codes d'accusé de réception de demande de répétition automatique hybride, HARQ-ACK, incluant un premier sous-livre de codes HARQ-ACK lié à un canal partagé de liaison descendante physique, PDSCH, basé sur un bloc de transport, TB, un deuxième sous-livre de codes HARQ-ACK lié à un PDSCH basé sur un groupe de blocs de code, CBG, et un troisième sous-livre de codes HARQ-ACK lié à une planification semi-persistante, SPS ; et
une section de transmission (220) configurée pour transmettre des informations HARQ-ACK correspondant au livre de codes HARQ-ACK en utilisant un canal de commande de liaison montante physique, PUCCH ; **caractérisé en ce que** la section de commande (210) est en outre configurée pour :
configurer le premier sous-livre de codes HARQ-ACK pour inclure un HARQ-ACK correspondant à une libération SPS ou un HARQ-ACK correspondant à un PDSCH SPS lié à des informations de commande de liaison descendante pour une activation SPS, et
configurer le troisième sous-livre de codes HARQ-ACK pour inclure un HARQ-ACK correspondant à un PDSCH SPS non lié aux informations de commande de liaison descendante pour l'activation SPS.

2. Terminal selon la revendication 1, dans lequel la section de commande (210) est en outre configurée pour attribuer le troisième sous-livre de codes HARQ-ACK après le premier sous-livre de codes HARQ-ACK dans le livre de codes HARQ-ACK.

3. Procédé de communication radio d'un terminal, comprenant :
une génération d'un livre de codes d'accusé de réception de demande de répétition automatique hybride, HARQ-ACK, incluant un premier sous-livre de codes HARQ-ACK lié à un canal partagé de liaison descendante physique, PDSCH, basé sur un bloc de transport, TB ; un deuxième sous-livre de codes HARQ-ACK lié à un PDSCH basé sur un groupe de blocs de code, CBG,
un troisième sous-livre de codes HARQ-ACK lié à une planification semi-persistante, SPS ; et une transmission d'informations HARQ-ACK correspondant au livre de codes HARQ-ACK en utilisant un canal de commande de liaison montante physique, PUCCH ; **caractérisé en ce que** le premier sous-livre de codes HARQ-ACK est configuré pour inclure un HARQ-ACK correspondant à une libération SPS ou un HARQ-ACK correspondant à un PDSCH SPS lié à des informations de commande de liaison descendante pour une activation SPS, et
le troisième sous-livre de codes HARQ-ACK est configuré pour inclure un HARQ-ACK correspondant à un PDSCH SPS non lié aux informations de commande de liaison descendante pour l'activation SPS.

4. Station de base (10) comprenant :
une section de réception (120) configurée pour recevoir, en utilisant un canal de commande de liaison montante physique, PUCCH, des informations d'accusé de réception de demande de répétition automatique hybride, HARQ-ACK, correspondant à un livre de codes HARQ-ACK incluant un premier sous-livre de codes HARQ-ACK lié à un canal partagé de liaison descendante physique, PDSCH, basé sur un bloc de transport, TB, un deuxième sous-livre de codes HARQ-ACK lié à un PDSCH basé sur un groupe de blocs de code, CBG, et un troisième sous-livre de codes HARQ-ACK lié à une planification semi-persistante, SPS ; et
une section de commande (110) configurée pour mettre en œuvre une retransmission sur la base des informations HARQ-ACK ;
**caractérisée en ce que**
le premier sous-livre de codes HARQ-ACK est configuré pour inclure un HARQ-ACK correspondant à une libération SPS ou un HARQ-ACK correspondant à un PDSCH SPS lié à des informations de commande de liaison descendante pour une activation SPS, et
le troisième sous-livre de codes HARQ-ACK est configuré pour inclure un HARQ-ACK correspondant à un PDSCH SPS non lié aux informations de commande de liaison descendante pour l'activation SPS.

5. Système comprenant un terminal (20) selon la revendication 1 et une station de base (10) selon la revendication 4.
